# FASCICULE DE BREVET EUROPEEN

(11) **EP 3 604 910 B1**
(45) Date de publication et mention de la délivrance du brevet: **17.01.2024**
(21) Numéro de dépôt: 19186377.8
(22) Date de dépôt: 15.07.2019
(51) Int. Cl.: F21V 8/00, F21S 41/24, F21S 41/663, F21S 41/147, F21S 41/26, F21S 41/27, F21S 41/32, F21S 41/43, F21S 41/151

(54) **PIECE OPTIQUE COMPRENANT UN BLOC AVEC UN DIOPTRE FORMANT PLIEUSE POUR DEUX FAISCEAUX**
OPTISCHES BAUTEIL, DAS EINEN BLOCK MIT EINEM DIOPTER UMFASST, DER EINE BEUGUNGSEINHEIT FÜR ZWEI LICHTSTRAHLEN BILDET
OPTICAL PART COMPRISING A BLOCK WITH A DIOPTRE FORMING A FOLDING MACHINE FOR TWO BEAMS

(30) Priorité: 02.08.2018 FR 1857252
(43) Date de publication de la demande: 05.02.2020
(73) Titulaire: Valeo Vision, 93012 Bobigny Cedex (FR)
(72) Inventeur: GROMFELD, Yves, 49000 ANGERS (FR)
(74) Mandataire: Valeo Visibility

(56) Documents cités:
- EP-A1- 3 150 905
- WO-A1-2018/094431
- FR-A1- 3 010 772

## Description

La présente invention se rapporte au domaine des dispositifs lumineux, notamment de véhicule automobile, émettant différents faisceaux lumineux à partir d'un même module optique.

Les faisceaux lumineux ayant des fonctions lumineuses différentes sont souvent réalisés par des modules optiques différents. L'inconvénient est l'encombrement dans le véhicule et le fait d'avoir une signature lumineuse différente selon le faisceau éclairé. C'est par exemple le cas lorsque l'on passe d'un faisceau de croisement à un faisceau route, ou inversement.

Le faisceau de croisement émet un faisceau d'éclairage de la route présentant une coupure au-dessus de laquelle quasiment aucun rayon n'est envoyé, permettant d'éviter l'éblouissement des véhicules suivis ou venant en sens opposé. Cette coupure présente notamment en circulation à gauche une portion horizontale située à 0,57 degrés (0,57°) au-dessous de l'horizon.

En l'absence de risque d'éblouissement, le véhicule passe en faisceau longue portée ou faisceau route qui éclaire au-dessus de l'horizon et est dépourvu de coupure, permettant ainsi d'éclairer à une portée bien plus élevée que le faisceau de croisement.

Il existe néanmoins des modules optiques permettant, grâce à un cache basculant, de réaliser alternativement une fonction de faisceau de croisement ou une fonction de faisceau route avec la même source lumineuse et le même dioptre de sortie. Cependant de tels systèmes nécessitent au moins un actionneur et un dispositif mécanique spécifique. Le document EP3150905 présente un module lumineux pour véhicule automobile permettant différentes fonctions d'éclairage.

Un problème technique que vise à résoudre la présente invention est donc de réaliser un module optique permettant de réaliser les deux fonctions d'éclairage dont une à coupure et une sans coupure ou coupée différemment, ce module ayant la même signature lumineuse pour ces deux fonctions, tout en simplifiant les mécanismes de passage d'une fonction à l'autre.

A cet effet, un premier objet de l'invention concerne un module lumineux pour véhicule automobile te que défini par la revendication 1. Selon l'invention, le module lumineux comprend une pièce optique comprenant un bloc formé d'un unique premier matériau transparent ou translucide, ce bloc comprenant :
- un premier collimateur et un deuxième collimateur en face de chacun desquels sont destinées à être positionnées respectivement une première et une deuxième sources de lumière, de manière à ce que les faisceaux lumineux de ces sources, respectivement premier et deuxième faisceaux, entrent dans le bloc au travers d'un dioptre d'entrée de ces collimateurs, les collimateurs étant agencés de manière à ce que ces sources puissent être positionnées dans un même plan ;
- un dioptre intermédiaire de sortie vers lequel le premier collimateur guide le premier faisceau de manière à ce que ce premier faisceau sorte du bloc au travers de ce dioptre intermédiaire,
- un dioptre de coupure formant une plieuse par rapport à ce premier faisceau et présentant un bord de coupure, la plieuse étant configurée pour renvoyer en arrière des rayons lumineux du premier faisceau susceptibles de passer en avant du bord de coupure, le premier collimateur et le dioptre intermédiaire étant agencés de manière à faire converger le premier faisceau à l'extérieur du bloc vers et sur ce bord de coupure,
le deuxième collimateur étant agencé de manière à faire converger le deuxième faisceau à l'intérieur du bloc vers et sur ce même bord de coupure, la plieuse formant également une plieuse par rapport à ce deuxième faisceau.

Le premier et le deuxième faisceaux se propagent ensuite vers une sortie de la pièce optique.

Il suffit alors de disposer une première et une deuxième source lumineuse respectivement en vis-à-vis du premier et du deuxième collimateurs, ainsi qu'un système de projection en aval de la plieuse et d'agencer celui-ci pour projeter l'image du bord de coupure. Cela permet de créer deux faisceaux complémentaires de part et d'autre d'une ligne de coupure, pouvant être générés alternativement ou ensemble, selon qu'on allume l'une ou l'autre des sources lumineuses ou qu'on les allume ensemble. La ligne de coupure correspond à l'image de ce bord de coupure.

Avec un bloc d'un même matériau d'une même pièce optique, on peut donc réaliser deux fonctions d'éclairage, une à coupure, notamment un faisceau de croisement, et une sans, notamment un faisceau route. Cela permet notamment de gagner en compacité et d'avoir la même signature.

De plus, on s'affranchit d'actionneur et d'un mécanisme pour passer d'un faisceau à l'autre, puisque c'est l'allumage ou l'extinction de l'une des sources de lumière qui permet de passer d'une fonction à l'autre.

Par ailleurs, l'agencement mécanique des sources de lumière est simplifié. Elles peuvent notamment être agencées sur un même support plan, pouvant être retiré ou monté en bloc.

La pièce optique permet donc de simplifier l'agencement du module optique dans lequel elle sera montée.

La pièce optique du module lumineux selon l'invention comprend les caractéristiques suivantes :
- la plieuse fonctionne en réflexion interne totale ; la fabrication de la pièce optique est plus rapide car il n'y a pas d'étape d'aluminiage de la plieuse ;
- le bloc comprend un retrait comprenant une surface formant le dioptre intermédiaire et une surface formant la plieuse ; cela permet une réalisation des dioptres lors de moulage de la pièce optique ;
- le bloc comprend :
   o une portion formant une optique primaire s'étendant entre une première et une deuxième extrémité,
   o un dioptre de retour agencé avec ledit dioptre intermédiaire et la plieuse entre ladite première extrémité et ladite deuxième extrémité,
   la pièce optique étant agencée de manière à ce que la plieuse réfléchisse le premier faisceau sur le dioptre de retour, de manière à ce que le premier faisceau rentre à nouveau dans le bloc au travers du dioptre de retour, avant de se propager vers la sortie de la pièce optique ;
- le retrait comprend une surface formant le dioptre de retour ;
- la pièce optique présente une portion de projection, formant un système de projection agencé d'une part en aval du bord de coupure de manière à recevoir le premier et le deuxième faisceaux après leur passage sur ce bord de coupure et d'autre part, de manière à projeter en sortie de la portion de projection une image du bord de coupure ; ainsi on réalise dans le premier et le deuxième faisceaux une ligne de coupure plus nette.

La pièce optique du module lumineux peut optionnellement comprendre une ou plusieurs des caractéristiques suivantes :
- le dioptre de retour peut être incliné vers l'amont en partant du bord de coupure ; on diminue le risque d'interférence du dioptre de retour avec le deuxième faisceau ;
- la distance entre le dioptre de retour et le dioptre intermédiaire augmente en s'éloignant du fond du retrait, ce fond étant formé par la plieuse ; cela facilite le démoulage de la pièce.

Ce module peut comprendre également un système de projection agencé d'une part en aval du bord de coupure de manière à recevoir le premier et le deuxième faisceaux après leur passage sur ce bord de coupure et d'autre part, de manière à projeter en sortie du module lumineux une image du bord de coupure.

Dans cette demande, un module lumineux, encore appelé module optique, est l'ensemble qui, à partir des rayons provenant initialement d'au moins une source lumineuse, forme un faisceau lumineux fonctionnel, à savoir le faisceau qui éclaire une surface extérieure au dispositif lumineux destiné à contenir le module lumineux ou qui est vu depuis l'extérieur du dispositif lumineux.

Le module lumineux selon l'invention peut optionnellement comprendre une ou plusieurs des caractéristiques suivantes :
- le système de projection est une pièce ou une portion de pièce monobloc en matériau transparent ou translucide, comprenant :
   o un dioptre de renvoi en aval et en vis-à-vis du bord de coupure,
   o un dioptre terminal formant la sortie du système de projection, le dioptre de renvoi étant agencé de manière à réfléchir le premier et le deuxième faisceaux vers ce dioptre terminal,
   le dioptre de renvoi et le dioptre terminal étant agencés de manière à ce que le premier et le deuxième faisceaux soient réfractés par le dioptre terminal et de manière à projeter une image du bord de coupure ; le positionnement du dioptre de renvoi et du dioptre intermédiaire est ainsi réalisé dès la fabrication, notamment par moulage, du système de projection ;
- au moins une portion de la plieuse s'étend dans un plan formant un angle supérieur ou égal à 90° avec un plan selon lequel le dioptre de renvoi s'étend globalement ; cela permet d'agencer plus verticalement une première portion de la pièce optique, en ayant une émission du faisceau lumineux fonctionnel selon un axe global environ horizontal, diminuant ainsi l'encombrement en profondeur de la pièce optique et/ou du module lumineux ;
- le dioptre de renvoi fonctionne en réflexion interne totale ;
- en sortie du système de projection, le deuxième faisceau forme un faisceau de croisement présentant une ligne de coupure supérieure image du bord de coupure et le premier faisceau forme une partie supérieure de faisceau route présentant une ligne de coupure inférieure image du bord de coupure ; ainsi les lignes de coupure supérieure et inférieure sont complémentaires et l'on peut former un faisceau route ou une partie de faisceau route en éclairant la première et la deuxième source de lumière.

L'invention a également pour objet un dispositif lumineux de véhicule, notamment un projecteur de véhicule, comprenant un module lumineux selon l'invention.

Le dispositif lumineux de véhicule selon l'invention peut également être compris dans un véhicule, notamment être connecté à l'alimentation électrique du véhicule.

Sauf indication contraire, les termes « avant », « arrière », « inférieur », « supérieur », « haut », « bas », « transversal », « longitudinal », « horizontal », ainsi que leurs déclinaisons en genre ou en nombre, se réfèrent au sens d'émission de lumière hors du module lumineux correspondant. Sauf indication contraire, les termes « amont » et « aval » se réfèrent au sens de propagation de la lumière.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est une vue en perspective arrière d'une pièce optique selon un exemple de réalisation de l'invention ;
- la figure 2 est une vue de côté de la figure 1 ;
- la figure 3 est une vue en perspective arrière et de dessous de la figure 1 ;
- la figure 4 est un schéma d'une coupe verticale longitudinale de la figure 2, montrant les rayons des premier et deuxième faisceaux, avec en plus les sources de lumière sur leur support, ce qui correspond à un exemple de module lumineux selon l'invention ;
- les figures 5 à 7 représentent dans un repère H, V, où H symbolise l'horizon et V l'axe vertical passant par l'axe optique A du module lumineux de la figure 4, les faisceaux lumineux obtenus en allumant respectivement la première, la deuxième ou les deux sources de lumière ;
- la figure 8 représente un module lumineux avec une pièce optique selon un deuxième exemple de réalisation.

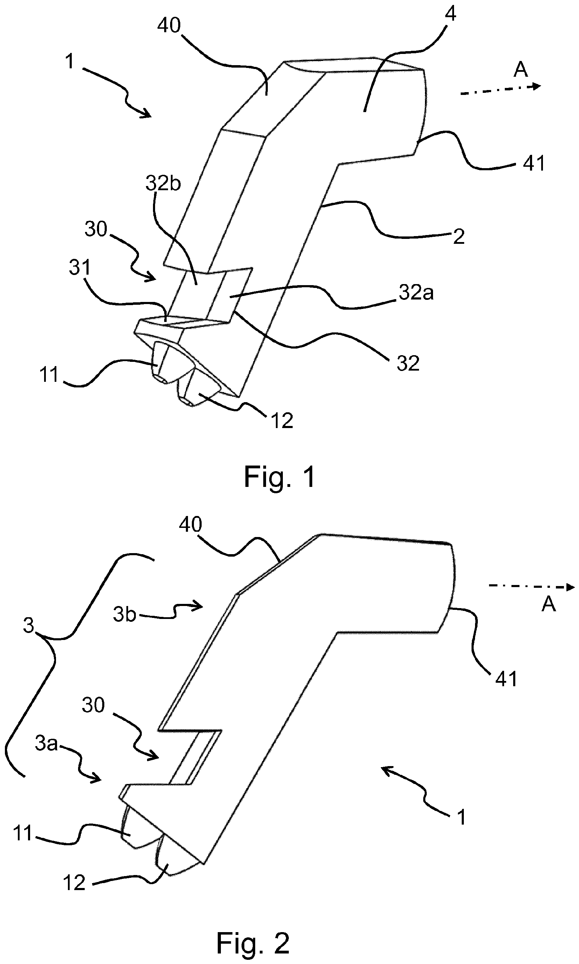

Les figures 1 à 3 illustrent un exemple de réalisation d'une pièce optique 1 selon l'invention.

Cette pièce optique 1 comprend un bloc 2 formé d'un unique premier matériau transparent ou translucide, par exemple obtenu par moulage.

Ce bloc 2 comprend un premier collimateur 11 et un deuxième collimateur 12, présentant chacun des dioptres d'entrée de lumière dans ce bloc 2.

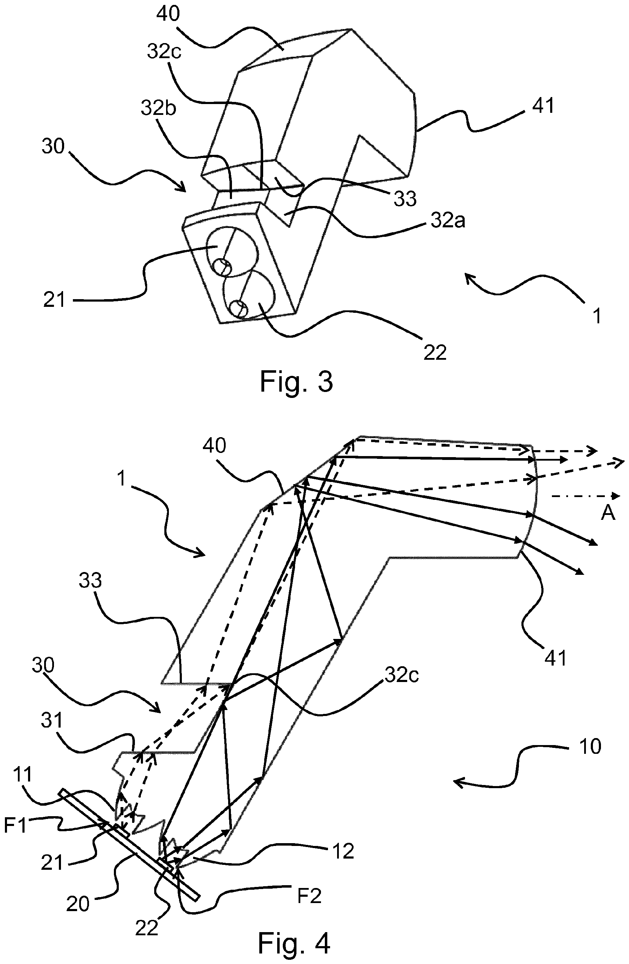

Comme illustré en figure 4, une première source de lumière 21 est placée en vis-à-vis du dioptre d'entrée du premier collimateur 11, de manière à ce que le faisceau lumineux de cette source 21, ci-après premier faisceau F1, entre dans le bloc 2 au travers de ce dioptre d'entrée. Notamment la majorité, voire la totalité de ses rayons lumineux, entre dans le bloc 2 au travers de ce dioptre d'entrée.

Egalement, une deuxième source de lumière 22 est placée en vis-à-vis du dioptre d'entrée du deuxième collimateur 12, de manière à ce que le faisceau lumineux de cette source 22, ci-après deuxième faisceau F2, entre dans le bloc 2 au travers de ce dioptre d'entrée. Notamment la majorité, voire la totalité de ses rayons lumineux, entre dans le bloc 2 au travers de ce dioptre d'entrée.

Ces premier et deuxième collimateurs 11, 12 sont agencés de manière à ce que la première et la deuxième sources de lumière 21, 22 puissent être positionnées dans un même plan. Ainsi, ces sources 21, 22 peuvent notamment être agencées sur un même support plan, tel qu'une surface supérieure de radiateur ou, comme ici, sur une carte de circuit imprimé 20 plane.

Selon l'invention, comme dans l'exemple illustré, le bloc 2 peut comprendre une portion formant une optique primaire 3 s'étendant entre une première extrémité 3a et une deuxième extrémité 3b. Le premier et le deuxième collimateurs 11, 12 sont agencés au bout de la première extrémité 3a.

Ici, la pièce optique 1 présente une portion de projection 4, formant un système de projection joint en une seule pièce avec ladite deuxième extrémité 3b. Autrement dit, l'optique primaire 3 et la portion de projection 4 forment ici le bloc 2.

Un retrait 30 est placé, ici en arrière, entre ladite première extrémité 3a et ladite deuxième extrémité 3b. Ce retrait 30 est agencé de manière à ce que des dioptres 31, 32, 33 délimitant ce retrait 30 forment des moyens de réalisation d'une ligne de coupure inférieure d'un faisceau et d'une ligne de coupure supérieure d'un autre faisceau, ces lignes de coupure étant complémentaires.

Ici, un premier dioptre 31, ci-après dioptre intermédiaire 31 de sortie, délimite le bas du retrait 30. Il est ici globalement horizontal.

Ce premier dioptre 31 est suivi d'un deuxième dioptre, ci-après dioptre de coupure ou plieuse 32. Cette dernière délimite le retrait 30 en avant et forme donc son fond, le retrait 30 étant ouvert vers l'arrière.

Le deuxième dioptre 32 est suivi d'un troisième dioptre 33, ci-après dioptre de retour 3.

La plieuse 32 se joint avec le dioptre de retour 33 en un bord de coupure 32c.

Ici la plieuse 32 comprend deux pans 32a, 32b sensiblement plans et formant entre eux un angle correspondant à l'angle entre une portion oblique et une portion horizontale d'une ligne de coupure d'un faisceau de croisement, soit environ 15°.

La portion de projection 4 comprend :
- un dioptre de renvoi 40 au-dessus et en vis-à-vis du bord de coupure 32c.
- un dioptre terminal 41 formant la sortie de la portion de projection 4.

Selon l'invention, comme ici, le dioptre de renvoi 40 et le dioptre terminal 41 peuvent former un système convergent avec un plan focal, de manière à ce que le bord de coupure 32c soit agencé dans ce plan focal.

Ici, les pans 32a, 32b de la plieuse 32 s'étendent dans un plan formant un angle supérieur ou égal à 90° avec un plan selon lequel le dioptre de renvoi 40 s'étend globalement.

La figure 4 illustre schématiquement le chemin du premier faisceau lumineux F1, dont les rayons sont représentés par des flèches en pointillés et dont la pointe se termine par deux segments. Est également représenté le chemin du deuxième faisceau lumineux F2, dont les rayons sont représentés par des flèches en trait plein et dont la pointe se termine par un triangle. Ces chemins sont illustrés depuis leur émission à partir des sources de lumière 21, 22, jusqu'à leur émission hors de la pièce optique 1 au travers de la sortie 41.

L'agencement de la pièce optique 1 permet ici les chemins des rayons décrits ci-après.

Le premier collimateur 11 dévie le premier faisceau F1 vers le dioptre intermédiaire 31, de manière à ce que ce premier faisceau sorte, par réfraction, du bloc 2 au travers de ce dioptre intermédiaire 31, et entre ainsi dans le retrait 30.

Grâce à l'agencement du premier collimateur 11 et du dioptre intermédiaire 31, le premier faisceau F1 converge à l'extérieur du bloc 2, dans le retrait 30, vers et sur le bord de coupure 32c.

D'une manière générale selon l'invention, comme ici, le système de projection 4 peut être focalisé sur le bord de coupure 32c.

Ainsi, les rayons du premier faisceau F1 passant au niveau du bord de coupure 32c atteignent ensuite le dioptre de renvoi 40, qui réfléchit ensuite ces rayons vers le dioptre terminal 41, d'où les rayons sortent par réfraction parallèles à l'axe optique A.

En revanche, les rayons du premier faisceau F1 passant en arrière du bord de coupure 32c rentrent par réfraction à nouveau dans le bloc 2 au travers du dioptre de retour 33 et atteignent le dioptre de renvoi 40, qui réfléchit ensuite ces rayons vers le dioptre terminal 41, d'où ces rayons sortent par réfraction plus inclinés vers le haut par rapport à l'axe optique A.

De même, les rayons du premier faisceau F1 qui rencontrent la plieuse 32 sont réfléchis vers le dioptre de retour 33 et rentrent donc par réfraction à nouveau dans le bloc 2, en passant à l'arrière du bord de coupure 32c. Le premier faisceau F1 est donc bien réfléchi, ici en partie, vers le dioptre de retour 33 par la plieuse 32. Comme pour les rayons évoqués au paragraphe précédent, les rayons réfléchis par la plieuse 32 atteignent le dioptre de renvoi 40, qui réfléchit ensuite ces rayons vers le dioptre terminal 41, d'où ces rayons sortent par réfraction plus inclinés vers le haut par rapport à l'axe optique A.

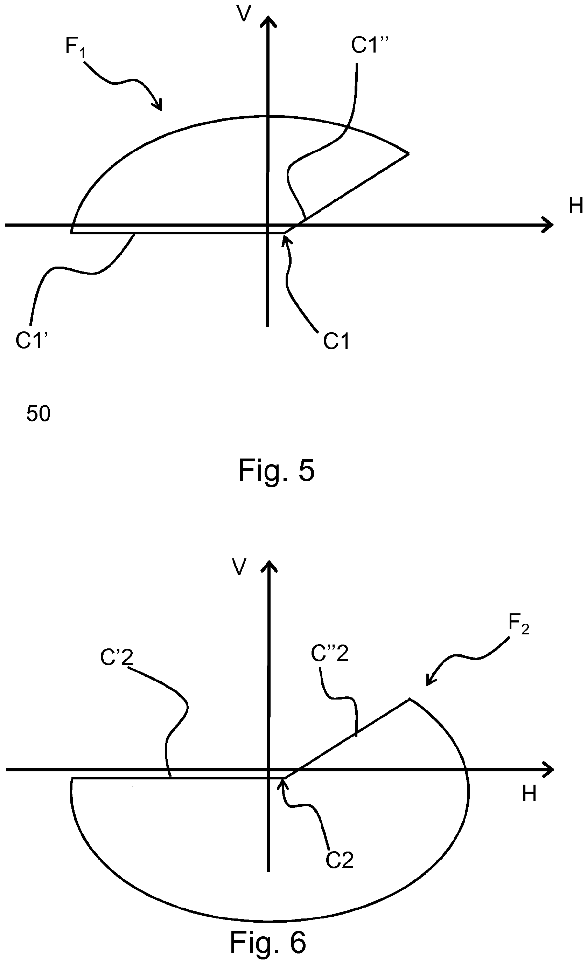

Ainsi, le premier faisceau F1 forme un faisceau d'éclairage présentant une ligne de coupure inférieure C1, image du bord de coupure 32c. Ce faisceau d'éclairage est représenté schématiquement en figure 5, en projection sur un écran vertical sensiblement perpendiculaire à l'axe optique A, par exemple situé à 25 mètres.

Comme on peut le voir en figure 5, la ligne de coupure C1 présente une portion horizontale C'1 et une portion oblique C"1, correspondant à la forme du bord de coupure 32c. L'angle entre ces deux portions C'1 et C"1 correspond en effet à l'angle que font entre eux les deux pans 32a, 32b de la plieuse 32, et donc à l'angle que présente le bord de coupure 32c.

Les rayons qui étaient susceptibles de passer en avant du bord de coupure 32c ont donc été renvoyés en arrière par le deuxième dioptre 32 du retrait 31 et complètent donc le faisceau F1. Le deuxième dioptre 32 forme donc bien une plieuse pour le premier faisceau F1, depuis l'extérieur du bloc.

Le deuxième collimateur 12 dévie le deuxième faisceau F2 de manière à le faire converger à l'intérieur du bloc 2 vers et sur le bord de coupure 32c.

Le système de projection 4 étant focalisé sur le bord de coupure 32c, les rayons du deuxième faisceau F2 passant au niveau du bord de coupure 32c atteignent ensuite le dioptre de renvoi 40, qui réfléchit ensuite ces rayons vers le dioptre terminal 41, d'où les rayons sortent par réfraction parallèles à l'axe optique A.

En revanche, les rayons du deuxième faisceau F2 passant en avant du bord de coupure 32c rentrent par réfraction à nouveau dans le bloc 2 et atteignent le dioptre de renvoi 40, qui réfléchit ensuite ces rayons vers le dioptre terminal 41, d'où ces rayons sortent par réfraction plus inclinés vers le bas par rapport à l'axe optique A.

De même, les rayons du deuxième faisceau F2 qui rencontrent la plieuse 32 sont réfléchis directement ou indirectement vers le dioptre de renvoi 40 en passant en avant du bord de coupure 32c. Comme pour les rayons évoqués au paragraphe précédent, le dioptre de renvoi 40 réfléchit ensuite ces rayons vers le dioptre terminal 41, d'où ils sortent par réfraction plus inclinés vers le bas par rapport à l'axe optique A.

Ainsi, le deuxième faisceau F2 forme un faisceau d'éclairage présentant une ligne de coupure supérieure C2, image du bord de coupure 32c. Ce faisceau d'éclairage est représenté schématiquement en figure 6, selon la même projection qu'en figure 5.

Comme on peut le voir en figure 6, la ligne de coupure C2 présente une portion horizontale C'2 et une portion oblique C"2, correspondant à la forme du bord de coupure 32c. L'angle entre ces deux portions C'2 et C"2 correspond en effet à l'angle que font entre eux les deux pans 32a, 32b de la plieuse 32, et donc à l'angle que présente le bord de coupure 32c.

Les rayons qui étaient susceptibles de passer en arrière du bord de coupure 32c ont donc été renvoyés en avant par le deuxième dioptre 32 du retrait 31 et complètent donc le deuxième faisceau F2. Le deuxième dioptre 32 forme donc bien une plieuse pour le deuxième faisceau F2, depuis l'intérieur du bloc 2.

On crée ainsi deux faisceaux F1 et F2 complémentaires de part et d'autre d'une ligne de coupure, pouvant être générés alternativement ou ensemble, selon qu'on allume l'une ou l'autre des sources lumineuses 21, 22 ou qu'on les allume ensemble.

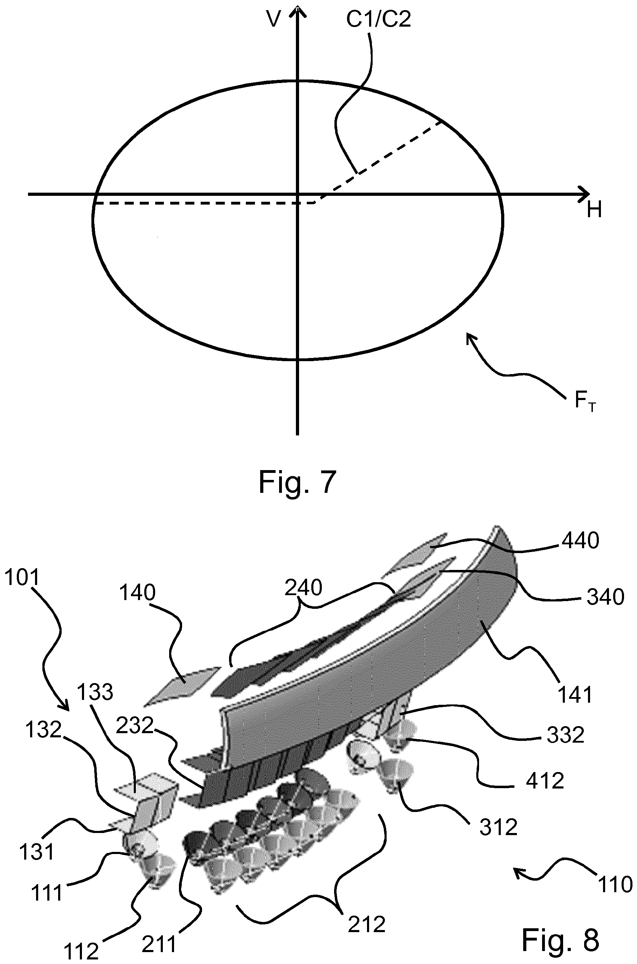

Ainsi en figure 7, on peut voir le faisceau total F_{T} obtenu en générant en même temps le premier faisceau F1 et le deuxième faisceau F2. Les lignes de coupures C1, C2 sont jointives et représentées ici en pointillés.

Par exemple, le deuxième faisceau F2 peut former un faisceau de croisement, comme illustré ici, ou une portion centrale avec la ligne de coupure oblique d'un faisceau de croisement. Cette portion est ensuite superposée en complément d'une portion basse du feu de croisement. Le faisceau total F_{T} peut lui former un faisceau route, comme en figure 7, ou, dans le deuxième cas la portion centrale du faisceau route.

La plieuse 32 et le dioptre de renvoi 40 fonctionnent ici en réflexion interne totale.

A noter qu'ici le retrait 30 est « vide », au sens où il est rempli par le gaz ambiant, l'air, contenu dans le dispositif lumineux équipé du module lumineux 10. Alternativement, le retrait 30 peut être rempli d'un deuxième matériau transparent ou translucide avec un indice optique différent de celui du bloc 2.

Alternativement, la plieuse 32 et le dioptre de renvoi 40 peuvent être recouverts à l'extérieur du bloc 2 d'un revêtement réfléchissant, tel qu'un aluminiage.

Ici l'optique primaire 1 et la portion de projection 4 ont été représentées de manière monobloc.

Cependant selon une variante non représentée, elles pourraient être réalisées en deux pièces distinctes. La pièce optique selon l'invention serait dans ce cas formée par l'optique primaire.

Selon le paragraphe précédent, la pièce optique peut ne pas comprendre de dioptre de retour, la pièce formant le système de projection pouvant être agencée de manière à collecter directement les rayons sortant du dioptre intermédiaire ou réfléchis par la plieuse à l'extérieur du bloc, et ceux sortant du bloc après guidage dans le bloc par réflexion sur la plieuse et/ou les parois de l'optique primaire ou encore provenant directement du deuxième collimateur.

Selon une variante non représentée, le retrait peut être utilisé de manière à ce que les rayons le traversant réalisent un ou une portion d'un faisceau de croisement, alors que le ou la portion de faisceau route est réalisé par les rayons restant dans le bloc. Par exemple, par rapport à l'exemple illustré, le retrait serait agencé à l'avant de l'optique primaire 3 et s'ouvrirait vers l'avant.

D'une manière générale selon l'invention, comme illustré, les sources lumineuses 21, 22 peuvent être des diodes électroluminescentes, encore appelées LED (pour *« Light Emitting Diode* » en langue anglaise).

La figure 8 illustre un deuxième mode de réalisation, où un module 110 avec une pièce optique massive est réalisé.

Cette pièce optique comprend une première portion élémentaire 101, qui est équivalente en agencement à la pièce optique 1 décrite ci-dessus, hormis qu'elle ne forme pas à elle seule une pièce optique. En particulier, ses collimateurs 111, 112, son retrait, avec ses trois dioptres 132, 132, 133, et son dioptre de renvoi 140 sont agencés de la même manière et ne seront pas davantage décrits.

Ici la pièce optique massive comprend également six deuxièmes portions élémentaires, dont les collimateurs, les plieuses et les dioptres de renvoi sont respectivement référencés 212, 232 et 240. Ces deuxièmes portions élémentaires diffèrent de la première 101 en ce que leurs plieuses 232 sont complètement planes. Elles permettent en effet de participer à la formation de la coupure horizontale du faisceau de croisement sur toute sa largeur, lorsque les deuxièmes faisceaux correspondants sont émis, ainsi que de couvrir la largeur du faisceau route, lorsque les premiers faisceaux correspondants sont émis.

La première portion élémentaire 101 est située d'un côté des deuxièmes portions élémentaires, qui elles sont adjacentes entre elles. De l'autre côté, sont agencées une troisième et une quatrième portions élémentaires, similaires à la première portion 101.

En figure 8, compte tenu de la perspective, on peut observer les deuxièmes collimateurs 312, 412 ainsi que les dioptres de renvoi 340, 440 de ces troisième et quatrième portions élémentaires. En revanche, seul le premier collimateur et la plieuse 332 de la troisième portion sont visibles, ceux de la quatrième portion étant cachés.

Ces troisième et quatrième portions élémentaires permettent également de réaliser des portions centrales avec coupure oblique pour venir compléter en intensité le faisceau formé par la première portion 101.

Un dioptre de sortie 141, avec ici une surface lisse, est agencé en vis-à-vis de tous les dioptres de renvoi 140, 240, 340, 440 et forme avec ces derniers le système de projection de chacune des portions élémentaires.

A noter qu'en figure 8, pour des raisons de clarté, seuls les collimateurs 111, 112, 212, 312, 412, les retraits, les dioptres de renvoi 140, 240, 340, 440 et le dioptre de sortie 141 sont représentés. Les surfaces les joignant entre eux ne sont pas représentées. Cependant, il s'agit ici d'une pièce monobloc massive.

Les portions élémentaires peuvent être jointes latéralement entre elles, les différents collimateurs et dioptres permettant à la majorité, voire la totalité des rayons de rester dans la portion élémentaire où ils sont initialement rentrés.

En variante, les portions élémentaires peuvent former des guides de lumière distincts se joignant en une seule pièce monobloc uniquement au niveau du système de projection ou entre les dioptres de renvoi et le dioptre de sortie 141.

Il est néanmoins possible de réaliser chaque portion élémentaire de manière individuelle et de les fixer et de les ajuster ensuite entre elles dans le dispositif lumineux.

## Revendications

1. Module lumineux (10) pour véhicule automobile comprenant une pièce optique (1) comprenant
- un bloc (2) formé d'un unique premier matériau transparent ou translucide, ce bloc comprenant :
- un premier collimateur (11) et un deuxième collimateur (12) en face de chacun desquels sont destinées à être positionnées respectivement une première (21) et une deuxième sources de lumière (22), de manière à ce que les faisceaux lumineux de ces sources, respectivement premier et deuxième faisceaux (F1 et F2), entrent dans le bloc au travers d'un dioptre d'entrée de ces collimateurs, les collimateurs étant agencés de manière à ce que ces sources puissent être positionnées dans un même plan,
- un dioptre intermédiaire (31) de sortie vers lequel le premier collimateur guide le premier faisceau de manière à ce que ce premier faisceau sorte du bloc au travers de ce dioptre intermédiaire,
- un dioptre de coupure formant une plieuse (32) par rapport à ce premier faisceau et présentant un bord de coupure (32c), la plieuse étant configurée pour renvoyer en arrière des rayons lumineux du premier faisceau susceptibles de passer en avant du bord de coupure (32c),le premier collimateur et le dioptre intermédiaire étant agencés de manière à faire converger le premier faisceau à l'extérieur du bloc vers et sur ce bord de coupure (32c),
le deuxième collimateur étant agencé de manière à faire converger le deuxième faisceau à l'intérieur du bloc vers et sur ce même bord de coupure, la plieuse formant également une plieuse par rapport à ce deuxième faisceau, la plieuse étant configurée pour renvoyer en avant des rayons lumineux du deuxième faisceau susceptibles de passer en arrière du bord de coupure (32c), le deuxième faisceau se propageant ensuite vers une sortie de la pièce optique,
la plieuse (32) fonctionnant en réflexion interne totale,
- une portion formant une optique primaire (3) s'étendant entre une première (3a) et une deuxième extrémité (3b),
- un dioptre de retour (33) agencé avec ledit dioptre intermédiaire (31) et la plieuse entre ladite première extrémité et ladite deuxième extrémité, la pièce optique étant agencée de manière à ce que la plieuse réfléchisse le premier faisceau (F1) sur le dioptre de retour, de manière à ce que le premier faisceau rentre à nouveau dans le bloc au travers du dioptre de retour, avant de se propager vers la sortie de la pièce optique,
- un retrait (30) comprenant une surface formant le dioptre intermédiaire (31), une surface formant la plieuse (32) et une surface formant le dioptre de retour (33)
- une portion de projection (4), formant un système de projection agencé d'une part en aval du bord de coupure (32c) de manière à recevoir le premier et le deuxième faisceaux (F1 et F2) après leur passage sur ce bord de coupure et d'autre part, de manière à projeter en sortie (41) de la portion de projection une image du bord de coupure.

2. Module lumineux (10) selon la revendication 1, dans lequel le système de projection est une pièce ou une portion de pièce monobloc (4) en matériau transparent ou translucide, comprenant :
- un dioptre de renvoi (40) en aval et en vis-à-vis du bord de coupure (32c),
- un dioptre terminal (41) formant la sortie du système de projection, le dioptre de renvoi étant agencé de manière à réfléchir le premier et le deuxième faisceaux (F1 et F2) vers ce dioptre terminal,
le dioptre de renvoi et le dioptre terminal étant agencés de manière à ce que le premier et le deuxième faisceaux soient réfractés par le dioptre terminal et de manière à projeter une image du bord de coupure.

3. Module lumineux (10) selon la revendication 2, dans lequel la plieuse (32) s'étend dans un plan formant un angle supérieur ou égal à 90° avec un plan selon lequel le dioptre de renvoi (40) s'étend globalement.

4. Module lumineux (10) selon la revendication 2, dans lequel le dioptre de renvoi (40) fonctionne en réflexion interne totale.

5. Module lumineux (10) selon l'une des revendications 2 à 4, dans lequel en sortie du système de projection (4), le deuxième faisceau (F2) forme un faisceau de croisement présentant une ligne de coupure supérieure (C2) image du bord de coupure (32c) et le premier faisceau (F1) forme une partie supérieure de faisceau route présentant une ligne de coupure inférieure (C1) image du bord de coupure (32c).

6. Dispositif lumineux de véhicule comprenant un module lumineux (10) selon l'une des revendications 1 à 5.

## Patentansprüche

1. Leuchtmodul (10) für ein Kraftfahrzeug, umfassend ein optisches Teil (1), umfassend
- einen Block (2), der aus einem einzigen ersten transparenten oder transluzenten Material gebildet ist, wobei dieser Block umfasst:
- einen ersten Kollimator (11) und einen zweiten Kollimator (12), gegenüber denen eine erste (21) beziehungsweise eine zweite (22) Lichtquelle positioniert werden sollen, so dass die Lichtbündel dieser Quellen, erste beziehungsweise zweite Lichtbündel (F1 und F2), in den Block durch einen Eintrittsdiopter dieser Kollimatoren hindurch eintreten, wobei die Kollimatoren so angeordnet sind, dass diese Quellen in einer selben Ebene positioniert werden können,
- einen Austrittszwischendiopter (31), zu dem der erste Kollimator das erste Bündel leitet, so dass dieses erste Bündel aus dem Block durch diesen Zwischendiopter hindurch austritt,
- einen Grenzdiopter, der eine Beugungseinheit (32) in Bezug auf dieses erste Bündel bildet und eine Grenzkante (32c) aufweist, wobei die Beugungseinheit dazu ausgestaltet ist, Lichtstrahlen des ersten Bündels, die vor der Grenzkante (32c) durchgehen könnten, nach hinten zurückzuführen, wobei der erste Kollimator und der Zwischendiopter so angeordnet sind, dass sie das erste Bündel außerhalb des Blocks zu und an dieser Grenzkante (32c) konvergieren lassen,
wobei der zweite Kollimator so angeordnet ist, dass er das zweite Bündel innerhalb des Blocks zu und an dieser selben Grenzkante konvergieren lässt, wobei die Beugungseinheit auch eine Beugungseinheit in Bezug auf dieses zweite Bündel bildet, wobei die Beugungseinheit dazu ausgestaltet ist, Lichtstrahlen des zweiten Bündels, die hinter der Grenzkante (32c) durchgehen könnten, nach vorn zurückzuführen, wobei sich das zweite Bündel anschließend zu einem Austritt des optischen Teils hin ausbreitet,
wobei die Beugungseinheit (32) mit innerer Totalreflexion funktioniert,
- einen Abschnitt, der eine Primäroptik (3) bildet, der sich zwischen einem ersten (3a) und einem zweiten Ende (3b) erstreckt,
- einen Rückdiopter (33), der mit dem Zwischendiopter (31) und der Beugungseinheit zwischen dem ersten Ende und dem zweiten Ende angeordnet ist, wobei das optische Teil so angeordnet ist, dass die Beugungseinheit das erste Bündel (F1) auf den Rückdiopter reflektiert, so dass das erste Bündel erneut in den Block durch den Rückdiopter eintritt, bevor es sich zum Austritt des optischen Teils hin ausbreitet,
- einen Rücksprung (30), der eine den Zwischendiopter (31) bildende Fläche, eine die Beugungseinheit (32) bildende Fläche und eine den Rückdiopter (33) bildende Fläche umfasst
- einen Projektionsabschnitt (4), der ein Projektionssystem bildet, das zum einen stromab der Grenzkante (32c) so angeordnet ist, dass es das erste und das zweite Bündel (F1 und F2) nach ihrem Durchgang an dieser Grenzkante aufnimmt, und zum anderen so, dass es im Austritt (41) des Projektionsabschnitts ein Abbild der Grenzkante projiziert.

2. Leuchtmodul (10) nach Anspruch 1, wobei das Projektionssystem ein einstückiges Teil oder ein einstückiger Teileabschnitt (4) aus transparentem oder transluzentem Material ist, umfassend:
- einen Umlenkdiopter (40) stromab und gegenüber der Grenzkante (32c),
- einen Enddiopter (41), der den Austritt des Projektionssystems bildet, wobei der Umlenkdiopter so angeordnet ist, dass er das erste und das zweite Bündel (F1 und F2) zu diesem Enddiopter hin reflektiert,
wobei der Umlenkdiopter und der Enddiopter so angeordnet sind, dass das erste und das zweite Bündel durch den Enddiopter gebrochen werden, und so, dass ein Abbild der Grenzkante projiziert wird.

3. Leuchtmodul (10) nach Anspruch 2, wobei sich die Beugungseinheit (32) in einer Ebene erstreckt, die einen Winkel größer oder gleich 90° mit einer Ebene bildet, entlang der sich der Umlenkdiopter (40) im Wesentlichen erstreckt.

4. Leuchtmodul (10) nach Anspruch 2, wobei der Umlenkdiopter (40) mit innerer Totalreflexion funktioniert.

5. Leuchtmodul (10) nach einem der Ansprüche 2 bis 4, wobei im Austritt des Projektionssystems (4) das zweite Bündel (F2) ein Abblendlichtbündel bildet, das eine obere Grenzlinie (C2) als Abbild der Grenzkante (32c) aufweist, und das erste Bündel (F1) einen oberen Teil eines Fernlichtbündels bildet, das eine untere Grenzlinie (C1) als Abbild der Grenzkante (32c) aufweist.

6. Fahrzeugleuchtvorrichtung, umfassend ein Leuchtmodul (10) nach einem der Ansprüche 1 bis 5.

## Claims

1. Luminous module (10) for automotive vehicle comprising an optical part (1) comprising
- a block (2) formed from a single first transparent or translucent material, this block comprising:
- a first collimator (11) and a second collimator (12) facing each of which are intended to be positioned a first light source (21) and a second light source (22), respectively, so that the light beams of these sources, first and second beams (F1 and F2), respectively, enter into the block through an entrance dioptric interface of these collimators, the collimators being arranged so that these sources may be positioned in the same plane,
- an intermediate exit dioptric interface (31) toward which the first collimator guides the first beam so that this first beam exits from the block through this intermediate dioptric interface,
- a cutoff dioptric interface that forms a folder (32) with respect to this first beam and that has a cutoff edge (32c), the folder being configured to steer rearward rays of the beam that were liable to pass in front of the cutoff edge (32c), the first collimator and the intermediate dioptric interface being arranged so as to make the first beam converge, outside of the block, toward and on this cutoff edge (32c),
the second collimator being arranged so as to make the second beam converge inside the block toward and on the same cutoff edge, the folder also forming a folder with respect to this second beam, the folder being configured to steer frontward rays of the second beam that were liable to pass to the rear of the cutoff edge (32c), the second beam then propagating toward an exit of the optical part,
the folder (32) operating via total internal reflection,
- a segment forming a primary optic (3) that extends between a first end (3a) and a second end (3b),
- a return dioptric interface (33) arranged with said intermediate dioptric interface (31) and the folder between said first end and said second end, the optical part being arranged so that the folder reflects the first beam (F1) onto the return dioptric interface, so that the first beam re-enters into the block through the return dioptric interface, before propagating toward the exit of the optical part
- a recess (30) comprising a surface forming the intermediate dioptric interface (31), a surface forming the folder (32) and a surface forming the return dioptric interface (33)
- a projecting segment (4), forming a projecting system arranged on the one hand downstream of the cutoff edge (32c) so as to receive the first and second beams (F1 and F2) after their passage past this cutoff edge, and on the other hand so as to project to the exit (41) of the projecting segment an image of the cutoff edge.

2. Luminous module (10) according to Claim 1, wherein the projecting system is a part or a segment of an integral part (4) made of transparent or translucent material, comprising:
- a steering dioptric interface (40) downstream and facing the cutoff edge (32c),
- an end dioptric interface (41) forming the exit of the projecting system, the steering dioptric interface being arranged so as to reflect the first and second beams (F1 and F2) toward this end dioptric interface,
the steering dioptric interface and the end dioptric interface being arranged so that the first and second beams are refracted by the end dioptric interface so as to project an image of the cutoff edge.

3. Luminous module (10) according to Claim 2, wherein at least one segment of the folder (32) lies in a plane making an angle larger than or equal to 90° to a plane in which the steering dioptric interface (40) on the whole lies.

4. Luminous module (10) according to Claim 2, wherein the steering dioptric interface (40) functions via total internal reflection.

5. Luminous module (10) according to one of Claims 2 to 4, wherein, on exiting the projecting system (4), the second beam (F2) forms a low beam having an upper cutoff line (C2) that is the image of the cutoff edge (32c) and the first beam (F1) forms an upper portion of a high beam having a lower cutoff line (C1) that is the image of the cutoff edge (32c).

6. Luminous vehicle device comprising a luminous module (10) according to one of Claims 1 to 5.
